# EUROPÄISCHE PATENTSCHRIFT

(11) **EP 1 775 173 B1**
(45) Veröffentlichungstag und Bekanntmachung des Hinweises auf die Patenterteilung: **07.01.2009**
(21) Anmeldenummer: 06017259.0
(22) Anmeldetag: 18.08.2006
(51) Int. Cl.: B60R 19/48

(54) **Vorrichtung zur Befestigung eines Sensors**
Device for fixing a sensor
Dispositif pour la fixation d'un capteur

(30) Priorität: 14.10.2005 DE 102005049140
(43) Veröffentlichungstag der Anmeldung: 18.04.2007
(73) Patentinhaber: REHAU AG + Co, 95111 Rehau (DE)
(72) Erfinder: Jakobs, Holger, 71088 Holzgerlingen (DE); Klärner, Mathias, 08523 Plauen (DE); Strobel, Karsten, 95111 Rehau (DE)

(56) Entgegenhaltungen:
- DE-A1- 19 621 964
- DE-U- 7 229 223

## Beschreibung

Die Erfindung betrifft eine Vorrichtung zur Befestigung eines Sensors gemäß den Merkmalen des Oberbegriffs des Patentanspruchs 1.

Im Serienfahrzeugbau ist es bekannt, Sensoren unmittelbar hinter einer Außenhaut anzuordnen und dabei so zu befestigen, dass von außen die Befestigung möglichst nicht zu sehen ist.

Zu derartigen Befestigungen sind bereits verschiedene Vorschläge gemacht worden, wie beispielsweise in der DE 196 21 964 B4. Bei der dort offenbarten Vorrichtung ist ein Halter für einen Sensor vorgesehen, der im montierten Zustand von einem Befestigungsteil kraftschlüssig an das Aufnahmeteil angedrückt wird. Mittels Klammern wird das Befestigungsteil an von der Rückseite des Aufnahmeteils abstehenden Stegen formschlüssig gehalten.

Da die Stege an die Rückseite des Aufnahmeteils an so genannte Lacknuten angeformt sind, kann die Befestigung des Sensors unsichtbar von der Außenseite, aber dennoch haltbar erfolgen. Bei der dargestellten Lösung werden jedoch zwei parallel zueinander verlaufende Lacknuten benötigt, die die konstruktive und designerische Freizügigkeit gerade im Bereich des Stoßfängers oder des Heckbereichs einschränken.

Die Aufgabe der Erfindung besteht darin, unter Beibehaltung einer unsichtbaren Befestigungsvorrichtung bei einfacher Montage die konstruktive Freizügigkeit im Stoßfängerbeziehungsweise Heckbereich zu erhöhen.

Erfindungsgemäß wird die Aufgabe dadurch gelöst, dass der Sensor mittels eines Halters, der in Montagerichtung auf einen vom Aufnahmeteil abstehenden Steg aufschiebbar ist und der sich über Widerlager federnd an dem Aufnahmeteil abstützt, befestigt wird. Erfindungsgemäß ist vorgesehen, dass ein zweiter Steg auf einer Geraden mit dem ersten Steg angeordnet ist. Das hat den Vorteil, dass nur eine Lacknut zur Befestigung des Halters benötigt wird.

Weitere vorteilhafte Ausgestaltungen ergeben sich aus den Unteransprüchen.

In einer bevorzugten Ausführung kann der Halter eine etwa mittig angeordnete plane Tragfläche aufweisen, auf der der Sensor befestigbar ist.

Vorzugsweise erstrecken sich zwei Befestigungslaschen von der Tragfläche, um an den zwei Stegen befestigt zu werden.

Im rechten Winkel zu den Befestigungslaschen können von der Tragfläche zwei S-förmig gebogene Widerlager abstehen, mit denen sich der Halter an dem Aufnahmeteil federnd abstützen kann.

Für die Befestigung des Sensors an der planen Tragfläche sind Befestigungselemente, wie beispielsweise Aufnahme- oder Rastelemente vorgesehen. Die Befestigung kann auch mittels Schraubverbindung erfolgen.

Um den Halter an den Stegen zu befestigen, sind korrespondierend zum Abstand der Stege Schlitze in die Befestigungslaschen eingebracht.

Die zwei Stege sind vorzugsweise korrespondierend zu dem Abstand der beiden Schlitze der Befestigungslaschen an eine konkave Kontur des Aufnahmeteils angeformt. Das hat den Vorteil, dass an diesen nach innen gewölbten Konturen von außen keine Einfallstellen oder Abzeichnungen zu sehen sind.

Vorzugsweise ist eine derartige Kontur im Bereich einer sogenannten Lacknut gegeben.

Wenn die Abmaße der Stege größer sind als die der Schlitze, kann der Halter beim Aufschieben in eine formschlüssige Anlage gebracht werden.

Ein bevorzugtes Ausführungsbeispiel der Erfindung wird im Folgenden anhand der Zeichnung erläutert.

Dabei zeigen:
- Fig. 1: eine Frontalansicht des erfindungsgemäßen Halters,
- Fig. 2: eine perspektivische Darstellung des Halters von schräg rechts in Einbaulage mit angeklipstem Sensor,
- Fig. 3: eine Schnittdarstellung gemäß Linie III-III in Figur 2,
- Fig. 4: eine perspektivische Darstellung gemäß Fig. 2 von schräg links sowie
- Fig. 5: eine Schnittdarstellung gemäß Linie V-V in Figur 4.

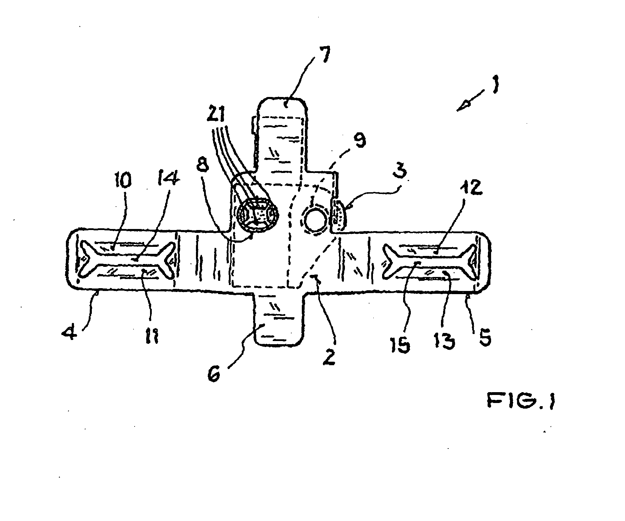

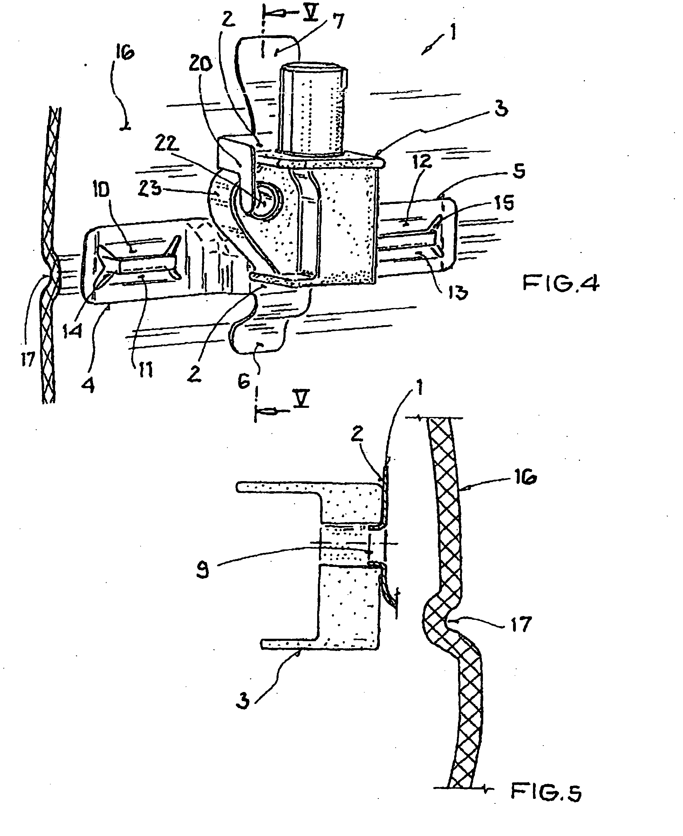

Figur 1 zeigt den erfindungsgemäßen Halter 1 in einer Ansicht aus Richtung eines nicht näher dargestellten Aufnahmeteils, an dem der Halter 1 befestigt ist. Der Halter 1 weist etwa mittig eine plane Tragfläche 2 auf, auf deren bildabgewandten Seite ein Sensor 3 befestigbar ist. Von der planen Tragfläche 2 erstrecken sich zwei Befestigungslaschen 4 und 5 seitlich. Etwa im rechten Winkel zu den Befestigungslaschen 4 und 5 stehen von der planen Tragfläche 2 zwei S-förmig gebogene Widerlager 6 und 7 ab, mit denen sich der Halter 1 an dem nicht dargestellten Aufnahmeteil abstützt. Die plane Tragfläche 2 weist einen etwa kreisförmigen Durchbruch 8 auf, der von einem Rastelement 21 (vgl. Fig. 5) des Sensors 3 durchsetzt ist. Von einem zweiten Durchbruch 9 steht ein in Figur 4 erkennbarer Flansch 24 in Richtung des Sensors 3 ab.

Die Befestigungslaschen 4 und 5 sind etwa spiegelsymmetrisch aufgebaut und umfassen federnde Klammern 10 bis 13 die jeweils einen Schlitz 14 und 15 begrenzen.

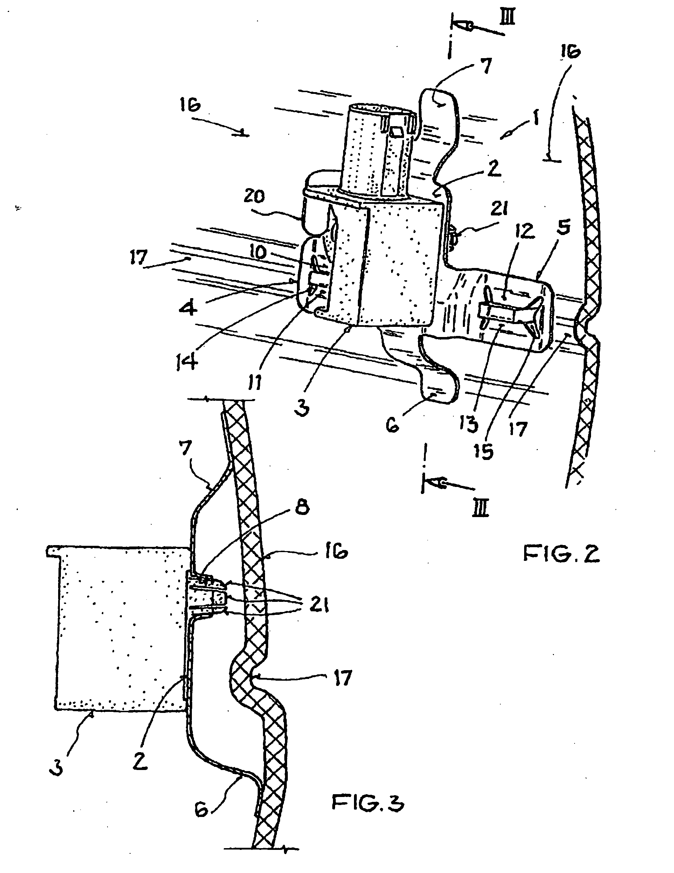

Sowohl Figur 2 als auch Figur 3 zeigen den Halter 1 zusammen mit dem Sensor 3 in ihrer Einbaulage. Ein Aufnahmeteil 16, das beispielsweise eine Stoßfängeraußenhaut sein kann, ist mit einer so genannten Lacknut 17 versehen. Die Lacknut 17 hat einen etwa C-förmigen Querschnitt. An die Lacknut 17 sind jeweils im Abstand der Schlitze 14 und 15 zwei Stege 18 und 19 angeformt, deren Abmaße die des Schlitzes 14 beziehungsweise 15 geringfügig übersteigen. Dadurch können die federnden Klammern 10 bis 13 beim Aufschieben des Halters 1 auf die Stege 18 und 19 in eine formschlüssige Anlage gebracht werden. Von der planen Tragfläche 2 ist ein Winkel 20 angeformt, um als Anschlag für den Sensor 3 zu dienen. Der Sensor 3 weist wie bereits schon erwähnt, an seiner dem Halter 1 zugewandten Seite ein Rastelement 21 auf, das mit dem Durchbruch 8 verrastend zusammenwirkt. Außerdem weist der Sensor 3 eine kreisrunde Öffnung 22 auf, die den abstehenden Flansch des Durchbruchs 9 aufnimmt. Eine konkav ausgeformte Anlagefläche 23 des Sensors 3 kommt in Einbaulage mit dem Winkel 20 in Eingriff. Eine Montage der Anordnung gestaltet sich denkbar einfach: Der Sensor 3 wird mit seinem Rastelement 21 in den dafür vorgesehenen Durchbruch 8 des Halters 1 gebracht und gleichzeitig der Flansch 24 des Durchbruchs 9 in die dafür vorgesehene Öffnung 22 des Sensors 3. Durch den Winkel 20 des Halters 1 wird im Zusammenwirken mit der konkaven Anlagefläche 23 des Sensors 3 eine Ausrichtung in X-/und Y-Richtung erreicht. Anschließend wird der Halter 1 zusammen mit dem bereits fixierten Sensor 3 auf die Stege 18 und 19 mit seinen Schlitzen 14 und 15 aufgeschoben bis die Widerlager 6 und 7 zur Anlage an dem Aufnahmeteil 16 gelangen. Durch entsprechend elastisch ausgebildete federnde Klammern 10 bis 13 wird eine Selbstfixierung des Halters 1 erreicht. Wahlweise können an den Klammern oder an den Stegen Widerhaken vorgesehen sein um den Halter gegen ein Lösen zu sichern.

## Patentansprüche

1. Vorrichtung zur Befestigung eines Sensors (3) an einem Aufnahmeteil (16) eines Kraftfahrzeugs mittels eines Halters (1), der in Montagerichtung auf einen vom Aufnahmeteil (16) abstehenden Steg (18, 19) aufschiebbar ist und der sich über Widerlager (6, 7) federnd an dem Aufnahmeteil (16) abstützt,
**dadurch gekennzeichnet, dass**
ein zweiter Steg (18, 19) vorgesehen ist, der auf einer Geraden mit dem ersten Steg angeordnet ist.

2. Vorrichtung nach Anspruch 1,
**dadurch gekennzeichnet, dass**
der Halter (1) eine plane Tragfläche (2) aufweist.

3. Vorrichtung nach Anspruch 2,
**dadurch gekennzeichnet, dass**
sich von der planen Tragfläche (2) zwei Befestigungslaschen (4, 5) erstrecken.

4. Vorrichtung nach Anspruch 2 oder 3,
**dadurch gekennzeichnet, dass**
rechtwinklig zu den Befestigungslaschen (4, 5) zwei Widerlager (6, 7) abstehen.

5. Vorrichtung nach Anspruch 4,
**dadurch gekennzeichnet, dass**
die Widerlager (6, 7) S-förmig ausgebildet sind.

6. Vorrichtung nach Anspruch 2,
**dadurch gekennzeichnet, dass**
die plane Tragfläche (2) mindestens eine Aufnahme (8, 9) aufweist, die mit einem Befestigungselement (21, 22) des Sensors (3) zusammenwirkt.

7. Vorrichtung nach Anspruch 6,
**dadurch gekennzeichnet, dass**
das Befestigungselement eine Rastnase (21) ist.

8. Vorrichtung nach Anspruch 6,
**dadurch gekennzeichnet, dass**
das das Befestigungselement eine Schraube ist.

9. Vorrichtung nach einem der Ansprüche 1 bis 3,
**dadurch gekennzeichnet, dass**
die zwei Stege (18, 19) korrespondierend zu dem Abstand zwischen Schlitzen (14, 15) in den Befestigungslaschen (4, 5) an eine konkave Kontur des Aufnahmeteils (17) angeformt sind.

10. Vorrichtung nach Anspruch 9,
**dadurch gekennzeichnet, dass**
die konkave Kontur des Aufnahmeteils eine Lacknut (17) ist.

11. Vorrichtung nach Anspruch 9 oder 10,
**dadurch gekennzeichnet, dass**
die Abmaße der Stege (18, 19) die Abmaße der Schlitze (14, 15) geringfügig übersteigen.

## Claims

1. Apparatus for fixing a sensor (3) to a receiving part (16) of a motor vehicle by means of a holder (1) which can be pushed onto a crosspiece (18, 19), which protrudes from the receiving part (16), in the mounting direction and which is supported in a spring-like manner on the receiving part (16) by means of abutments (6, 7), **characterized in that** a second crosspiece (18, 19) is provided which is arranged in a straight line with the first crosspiece.

2. Apparatus according to Claim 1, **characterized in that** the holder (1) has a planar supporting face (2).

3. Apparatus according to Claim 2, **characterized in that** two fixing tabs (4, 5) extend from the planar supporting face (2).

4. Apparatus according to Claim 2 or 3, **characterized in that** two abutments (6, 7) protrude at right angles to the fixing tabs (4, 5).

5. Apparatus according to Claim 4, **characterized in that** the abutments (6, 7) are of S-shaped design.

6. Apparatus according to Claim 2, **characterized in that** the planar supporting face (2) has at least one receptacle (8, 9) which interacts with a fixing element (21, 22) of the sensor (3).

7. Apparatus according to Claim 6, **characterized in that** the fixing element is a latching lug (21).

8. Apparatus according to Claim 6, **characterized in that** the fixing element is a screw.

9. Apparatus according to one of Claims 1 to 3, **characterized in that** the two crosspieces (18, 19) are integrally formed on a concave contour of the receiving part (17) in a manner corresponding to the distance between slots (14, 15) in the fixing tabs (4, 5).

10. Apparatus according to Claim 9, **characterized in that** the concave contour of the receiving part is a groove (17) in the paint.

11. Apparatus according to Claim 9 or 10, **characterized in that** the dimensions of the crosspieces (18, 19) slightly exceed the dimensions of the slots (14, 15).

## Revendications

1. Dispositif pour la fixation d'un capteur (3) à une partie de réception (16) d'un véhicule automobile au moyen d'un support (1) qui peut être poussé dans la direction de montage sur une nervure (18, 19) saillant depuis la partie de réception (16) et qui s'appuie élastiquement sur la partie de réception (16) par le biais de butées (6, 7), **caractérisé en ce qu'**il est prévu une deuxième nervure (18, 19) qui est disposée en alignement avec la première nervure.

2. Dispositif selon la revendication 1, **caractérisé en ce que** le support (1) présente une surface porteuse plane (2).

3. Dispositif selon la revendication 2, **caractérisé en ce que** deux pattes de fixation (4, 5) s'étendent depuis la surface porteuse plane (2).

4. Dispositif selon la revendication 2 ou 3, **caractérisé en ce que** deux butées (6, 7) font saillie à angle droit par rapport aux pattes de fixation (4, 5).

5. Dispositif selon la revendication 4, **caractérisé en ce que** les butées (6, 7) sont réalisées en forme de S.

6. Dispositif selon la revendication 2, **caractérisé en ce que** la surface porteuse plane (2) présente au moins un logement (8, 9) qui coopère avec un élément de fixation (21, 22) du capteur (3).

7. Dispositif selon la revendication 6, **caractérisé en ce que** l'élément de fixation est un ergot d'encliquetage (21).

8. Dispositif selon la revendication 6, **caractérisé en ce que** l'élément de fixation est une vis.

9. Dispositif selon l'une quelconque des revendications 1 à 3, **caractérisé en ce que** les deux nervures (18, 19) sont façonnées de manière à correspondre à la distance entre des fentes (14, 15) dans les pattes de fixation (4, 5), sur un contour concave de la partie de réception (17).

10. Dispositif selon la revendication 9, **caractérisé en ce que** le contour concave de la partie de réception est une rainure de peinture (17).

11. Dispositif selon la revendication 9 ou 10, **caractérisé en ce que** les dimensions des nervures (18, 19) dépassent légèrement les dimensions des fentes (14, 15).
